# EUROPEAN PATENT SPECIFICATION

(11) **EP 3 389 166 B1**
(45) Date of publication and mention of the grant of the patent: **11.03.2020**
(21) Application number: 17166033.5
(22) Date of filing: 11.04.2017
(51) Int. Cl.: H02K 5/24, H02K 1/17, H02K 1/18, H02K 1/14

(54) **ELECTRIC MOTOR**
ELEKTROMOTOR
MOTEUR ÉLECTRIQUE

(43) Date of publication of application: 17.10.2018
(73) Proprietor: Mahle International GmbH, 70376 Stuttgart (DE)
(72) Inventor: BASA, Andrej, 5294 Dornberk (SI); FURLAN, Martin, 5271 Vipava (SI); PELJHAN, Borut, 5271 Vipava (SI)
(74) Representative: BRP Renaud & Partner mbB Rechtsanwälte Patentanwälte Steuerberater

(56) References cited:
- WO-A2-2005/042857
- CN-U- 204 145 188
- DE-A1-102013 213 702
- GB-A- 2 344 697
- JP-A- H11 234 956
- JP-A- 2007 189 812
- JP-A- 2008 301 679
- JP-A- 2014 073 013
- US-A- 3 562 089
- US-A1- 2008 012 446

## Description

The present invention relates to an electric motor with the features of the preamble of claim 1. In addition, the invention relates to an electric machine having such an electric motor.

During the operation of electric motors, vibrations and noises occur through various causes which it is desirable to minimise. The vibrations or oscillations and noises of such an electric motor are based on a number of different forces which occur during the operation. Substantially, electromagnetic forces and mechanical forces occur. The electromagnetic forces, which generate oscillations, are harmonic oscillations which are substantially caused through rotation of the motor rotor. The mechanical forces that can occur during the operation of electric motors also include for example oscillations transmitted to the shaft by ball bearings and/or unbalances of the individual components of the electric motor, which are created through in most cases unavoidable manufacturing tolerances. Decreasing manufacturing tolerances would result in overproportionately high costs. To reduce such vibrations and noises, the exciting forces can be reduced on the one hand during the operation of the electric motor, while it does not appear possible at present to completely eliminate these or on the other hand advantageously increase the strength or the damping characteristics of the electric motor accordingly. Increasing the strength or stiffness of the materials of which the electric motor is composed can lead to an effective reduction of vibrations and noises in the case that the rotational speed or the motor frequency is relatively constant. It is also possible for the above-mentioned case to increase the strength and stiffness of the electric motor, by means of an advantageous design or shape of the different parts respectively subassemblies of the electric motor. With a variable rotational speed or motor frequencies by contrast it is only possible with difficult to keep away the changing magnetic and mechanical forces from resonance bodies, which are in connection with the electric motor, and also from the electric motor proper.

As is known, the damping of the structure of the electric motor constitutes the sometimes most trivial solution. Damping can be achieved such that in particular components of the electric motor, which are subjected to an elevated degree to vibrations, are produced from materials which have a high intrinsic damping characteristic per se. A problem accompanying the replacement or a change of the component materials of the electric motor is that such component materials should also comply with other requirements such as for example a suitable stiffness or strength, a load capacity to suit requirements, an appropriate temperature resistance and an advantageous magnetic characteristic.

From US 3 546 504 A and DE 1 613 283 A1 an arrangement for preventing resonance oscillations of individual components created as a consequence of electromagnetic and/or mechanically excited oscillation and for preventing the airborne and structure-borne sound radiation of individual components of a housingless electric miniature motor of elongated design is known. All design elements of the motor, which merely exercise a supporting or cohesive function and which either oscillate themselves or can be excited to co-oscillate or resonance oscillations by way of the oscillations that occur during the operation of the motor, are formed from a material with extremely high intrinsic damping. It is further evident from the applications that those parts of the motor which for mechanical or electrical reasons can only be produced from a material of low intrinsic damping and from which oscillations emanate, are separated from the neighbouring components by a layer consisting of oscillation-damping material.

Disadvantageous with the current state of the art is that with respect to electric motors the focus is directed at damping bearings and damping the shaft. In the case that the magnetic forces are more pronounced in the electric motor then the mechanical forces can thus be called dominant thus forces, it is explicitly necessary to adequately dampen the stator. Damping between bearings and housing as well as damping of a shaft are effective when the mechanical exciting forces are dominant, but not when the magnetic forces acting on a yoke predominate. In such cases the damping of the yoke is required.

An electric motor of the generic type is known for example from JP 2014-073 013 A and has a housing acting as yoke, which encloses an external stator in circumferential direction, and an internal rotor, which is rotatably mounted on the housing about an axis of rotation relative to the stator, wherein at least one pole body of the stator is radially supported on the housing by way of a damping layer, and wherein the damping layer is directly in contact with the housing and with the pole body.

Other electric motors of similar types are known from CN 204 145 188 U, JP 2007-189 812 A, and JP H11-234956 A.

Electric motors having an annular one-piece permanent magnet are known from GB 2 344 697 A and US 2008/0 012 446 A1.

Electric motors having a holding device for holding a permanent magnet in the housing are known from DE 10 2013 213 702 A1 and JP 2008-310 679 A. Damping layers formed from multiple layers are known from US 3,562,089 A1 and WO 2005/042857 A2.

The invention therefore deals with the problem of stating an improved or at least another embodiment for an electric motor of the type described above or for a combination equipped with such, which is characterized by a reduction of vibrations and noises.

According to the invention, this problem is solved through the subject of the independent claim 1. Advantageous embodiments are subject of the dependent claims.

The invention, with an electric motor, is based on the general idea of radially supporting at least one pole body of a stator on a housing by way of a damping layer so that oscillations which are caused by magnetic forces on the stator are dampened. By dampening the stator, the interfering noises caused by oscillations of the magnetic forces during the operation of the electric motor are eliminated or at least reduced. To this end, such an electric motor, in particular for a motor vehicle, comprises a housing, which encloses an external stator in circumferential direction and an internal rotor, which is rotatably mounted on the housing about an axis of rotation relative to the stator. According to the invention, at least one such pole body of the stator is radially supported on the housing by way of a damping layer; said damping layer is directly in contact with the housing and directly in contact with the pole body. It is practical that both the housing acting as yoke are moulded cylindrically radially to the inside and also that the pole body is moulded cylindrically radially to the outside, so that the damping layer is preferably evenly arranged in constant material thickness between the housing acting as yoke and the pole body. The damping layer is thus delimited radially to the inside by the pole body and radially outside by the housing of the stator acting as yoke. It is to be understood that the damping layer between the housing acting as a yoke and the at least one pole body according to the invention can have any shape, in particular it is conceivable for the damping layer to have a plurality of spaced longitudinal sections in the circumferential direction. Likewise, a varying radial extent or material thickness of the damping layer is conceivable. It is particularly advantageous in the idea according to the invention that the original geometry or dimension of the electric motor can be maintained.

According to the invention, the pole body of the stator is formed as a one-piece permanent magnet that is closed in circumferential direction.

In a practical embodiment, the damping layer comprises a material with an intrinsic damping characteristic that is higher compared with the material of the pole body and compared with the material of the housing of the stator acting as yoke, in particular a greater logarithmic decrement. The damping layer can be formed from a viscoelastic material, in particular from a plastic. Furthermore, the damping layer can take place by spraying the viscoelastic material onto a radial inside of the housing of the stator acting as yoke. It is likewise conceivable that a space, which materialises through a radial spacing of the pole body from the housing inner wall, creates the damping layer through a subsequent filling with such a viscoelastic material.

According to the invention, all conceivable different production techniques which are suitable for arranging the damping layer between the pole bodies and the housing acting as yoke are protected within the scope of this invention. For example, the damping layer can be applied as a film, as a spray or as an adhesive.

According to the invention, the damping layer comprises multiple layers which are formed from different viscoelastic materials with different material characteristics with respect to their oscillation behaviour. The individual layers of the damping layer can be connected to one another sandwich-like.

Practically, the direct connection between the damping layer and the housing of the stator acting as yoke is realised adhesively or by preloading the individual components. The direct connection between the damping layer and the pole body can practically be effected adhesively or by a preload.

Let it be said that the damping layer has a relative material thickness which is selected with respect to a magnetic characteristic between the pole bodies and the housing acting as yoke that is not significantly deviating.

Within the scope of the invention, an electric machine can comprise at least one or more of the electric motors described by claim 1.

Further important features and advantages of the invention are obtained from the subclaims, from the drawings and from the associated figure description by way of the drawings.

It is to be understood that the features mentioned above and still to be explained in the following cannot only be used in the respective combination stated but also in other combinations or by themselves as far as they do not depart from the scope of the present invention, which is defined by the appended claims.

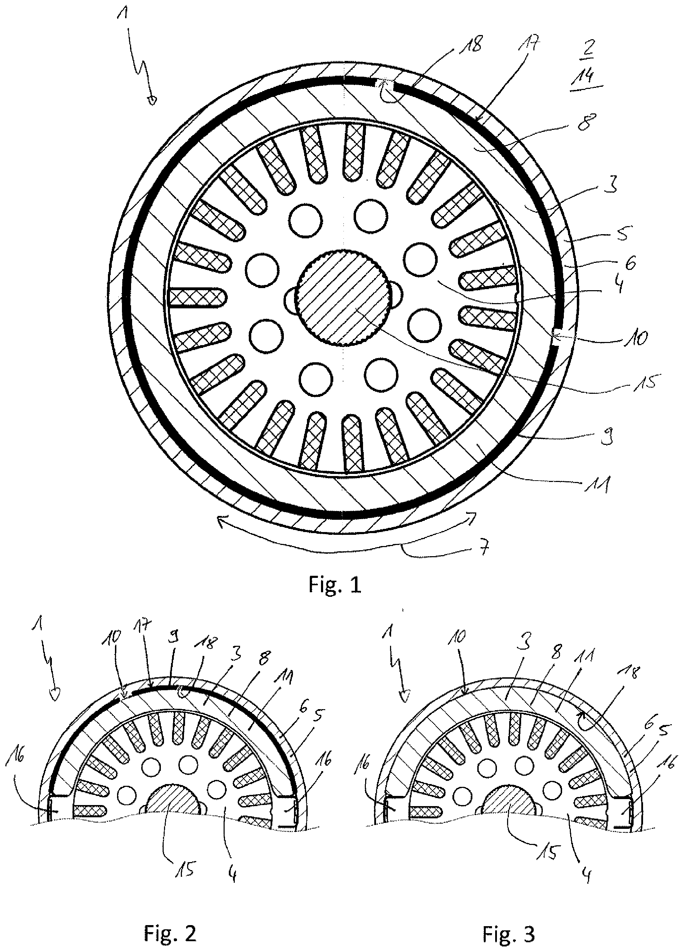

Preferred exemplary embodiments are shown in the drawings and are explained in more detail in the following description, wherein same reference characters relate to same or similar or functionally same components, and wherein only figure 1 shows an embodiment according to the invention whereas figures 2 to 7 show embodiments which are not according to the invention.

It shows, in each schematically,
- Fig. 1: a sectional representation in cross section of an electric motor with a damping layer arranged on a radial outside of a pole body which supports itself to the outside on a housing acting as yoke,
- Figs. 2 - 3: in each case a sectional representation of the electric motor with two pole bodies which are configured as permanent magnets, with arranged damping layer and without arranged damping layer,
- Figs. 4 - 5: in each case a sectional representation of the electric motor with six pole bodies which are configured as permanent magnets, with arrangement of such a damping layer and without arranged damping layer,
- Figs. 6 - 7: in each case a sectional representation of the electric motor with at least two pole bodies which are configured as electromagnetic exciter coils with pole shoes, with arrangement of such a damping layer and without arranged damping layer.

Fig. 1 shows a sectional representation of an electric motor 1, in particular for a motor vehicle 2 which is not otherwise shown, with an external stator 3, which to the outside is cylindrically formed by a housing 6 acting as yoke 5. The electric motor 1 furthermore comprises an internal rotor 4 which is rotatably mounted on the housing 6 relative to the stator 3 about an axis of rotation. In the region of the axis of rotation, the rotor 4 comprises a concentrically formed shaft 15 which is connected to the rotor 4 in a fixed manner. In addition to the housing 6 acting as yoke 5, the stator comprises a pole body 8 which is formed as permanent magnet 11. The permanent magnet 11 is configured in one piece closed in circumferential direction 7 and on its radial outside 10 is in direct contact with a damping layer 9. The damping layer 9 in turn is in direct contact, on its radial outside 17, with the housing 6 of the stator 3 acting as yoke 5. The damping layer 9 is thus radially delimited to the inside by the pole body 8, in this case by the permanent magnets 11, and radially delimited to the outside by the housing 6 of the stator 3 acting as yoke 5.

The damping layer 9 comprises a material with an intrinsic damping characteristic that is higher compared with the material of the pole body 8 and compared with the material of the housing 6 of the stator 3 acting as yoke, in particular a greater logarithmic decrement. The damping layer 9 can be formed from a viscoelastic material, in particular from a plastic. Furthermore, the damping layer 9 can be realised by spraying the viscoelastic material onto a radial inside 18 of the housing 6 of the stator 3 acting as yoke 5.

The damping layer 9 can comprise multiple layers which are formed from different viscoelastic materials with different material characteristics with respect to their oscillation behaviour. The individual layers of the damping layer 9 can be in connection with one another sandwich-like.

The direct connection between the damping layer 9 and the housing 6 of the stator 3 acting as yoke 5 can be adhesive or realised by way of preloading the individual components. The direct connection between the damping layer 9 and the pole body 8 can be effected adhesively or through a preload.

Figs. 2 - 3 in each case show a sectional representation of the electric motor 1 with two pole bodies 8 which are configured as permanent magnets 11, wherein in Fig. 2 a damping layer 9 according to the invention is arranged and Fig. 3 represents an embodiment version without arrangement of the damping layer 9.

The embodiment version of the electric motor show in Fig. 2 comprises two pole bodies 8 which are arranged spaced from one another in circumferential direction 7. The pole bodies 8 are formed by permanent magnets 11 and are formed evenly about the rotor 4 in circumferential direction 7 circular segment-like. In the region of the radial outside 10 of the pole bodies 8, i.e. in this embodiment version on the radial outside of the permanent magnets 11, the damping layer 9 is arranged. A holding device 16 radially presses the permanent magnets 11 against the housing 6 of the stator acting as yoke 5, wherein the damping layer 9, which is arranged between the permanent magnet 11 and the housing 6 of the stator 3 acting as yoke 5, is subjected to a radial preload.

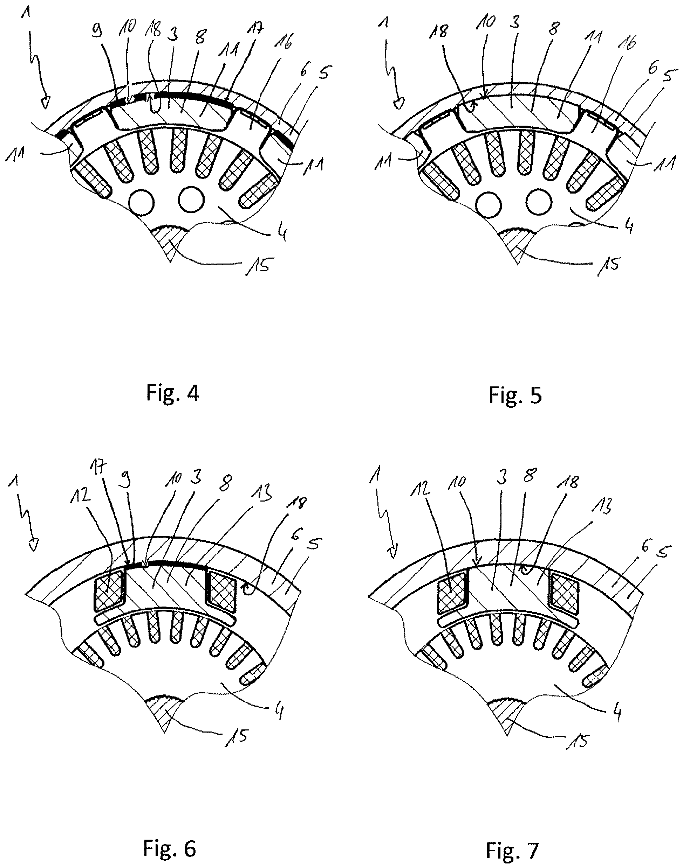

Figs. 4 - 5 show in each case a sectional representation of the electric motor 1 with six pole bodies 8, which are configured as permanent magnets 11, wherein in Fig. 4 a damping layer 9 according to the invention is arranged and Fig. 5 represents an embodiment version without arrangement of the damping layer 9.

The stator 3 of the electric motor 1 in the shown embodiment version is formed from six pole bodies 8, which are arranged spaced from one another and are configured evenly about the rotor 4 in circumferential direction 7 circular segment-like.

The individual pole bodies 8 are held with a holding device 16 on the housing 6 of the stator 3 acting as yoke 5. The holding device 16 acts against the pole bodies 8 radially to the outside, in the direction of the housing 6 of the stator 3 acting as yoke 5, wherein the damping layers 9 arranged between the pole bodies 8 and the housing 6 acting as yoke 5 are radially preloaded and a direct contact between the damping layers 9 and the pole bodies 8 materialises.

Figs. 6 - 7 in each case show a sectional representation of the electric motor 1 with at least two pole bodies 8, which are configured as electromagnetic exciter coils 12 with pole shoes 13, wherein in Fig. 6 a damping layer 9 according to the invention is arranged and Fig. 7 represents an embodiment version without arrangement of the damping layer 9.

The embodiment version of the electric motor 1 shown in Fig. 6 shows such a pole body 8 which is configured with such an electromagnetic exciter coil 12 and such a pole shoe 13. Such a pole shoe 13 with such an electromagnetic exciter coil 12 forms the pole body 8 of the stator 3. The radial outside 10 of the pole body 12, which in this version corresponds to the radial outside of the pole shoe 13, is moulded cylindrically and is thus in direct contact with the damping layer 9, which in turn on its radial outside is in direct contact with the radial inside 18 of the housing 6 of the stator 3 acting as yoke 5.

The stator 3 can comprise multiple pole bodies 8 which are formed from such electromagnetic exciter coils 12 in connection with such pole shoes 13. The pole bodies 8 are arranged spaced from one another and configured evenly in circumferential direction 7 about the rotor 4 circular segment-like.

Within the scope of the invention, an electric machine 14 can comprise at least one or more of the electric motors 1 described in fig. 1.

## Claims

1. An electric motor (1), in particular for a motor vehicle (2),
- with a housing (6) acting as yoke (5), which encloses an external stator (3) in circumferential direction (7),
- with an internal rotor (4), which is rotatably mounted on the housing (6) about an axis of rotation relative to the stator (3),
- wherein at least one pole body (8) of the stator (3) is radially supported on the housing (6) by way of a damping layer (9) dampening vibrations and noise, and
- wherein the damping layer (9) is directly in contact with the housing (6) and with the pole body (8),
**characterized in that**,
- the pole body (8) of the stator (3) is formed as a one-piece permanent magnet (11) closed in circumferential direction (7), and
- the damping layer (9) is formed from multiple layers which are formed from different viscoelastic materials and these layers are in connection with one another sandwich-like.

2. The electric motor according to claim 1,
**characterized in that**,
the pole body (8) of the stator (3) is moulded cylindrically at least on its radial outside (10).

3. The electric motor according to claim 1 or 2,
**characterized in that**,
the damping layer (9) comprises a material with an intrinsic damping characteristic that is higher compared with the material of the pole body (8) and compared with the material of the housing (6) of the stator (3) acting as yoke (5), in particular with a greater logarithmic decrement.

4. The electric motor according to any one of the claims 1 to 3,
**characterized in that**,
the damping layer (9) is adhesively connected to the housing (6) acting as yoke (5) and/or to the pole body (8).

5. An electric machine (14),
**characterized in that**,
the electric machine (14) comprises at least one such electric motor (1), which is configured according to any one of the claims described above.

## Patentansprüche

1. Elektromotor (1), insbesondere für ein Kraftfahrzeug (2),
- mit einem als Joch (5) wirkenden Gehäuse (6), das in Umfangsrichtung (7) einen Außenstator (3) umschließt,
- mit einem Innenrotor (4), der um eine Drehachse relativ zum Stator (3) drehbar am Gehäuse (6) gelagert ist,
- wobei mindestens ein Polkörper (8) des Stators (3) radial an dem Gehäuse (6) mittels einer Dämpfungsschicht (9) gelagert ist, die Schwingungen und Rauschen abdämpft, und
- wobei die Dämpfungsschicht (9) direkt in Kontakt mit dem Gehäuse (6) und mit dem Polkörper (8) ist,
**dadurch gekennzeichnet, dass**
- der Polkörper (8) des Stators (3) als ein einstückiger Permanentmagnet (11) ausgebildet ist, der in Umfangsrichtung (7) geschlossen ist, und
- die Dämpfungsschicht (9) aus einer Mehrzahl von Schichten ausgebildet ist, die aus unterschiedlichen viskoelastischen Materialien gebildet ist und diese Schichten sandwichartig miteinander verbunden sind.

2. Elektromotor nach Anspruch 1,
**dadurch gekennzeichnet, dass**
der Polkörper (8) des Stators (3) mindestens an seiner radialen Außenseite (10) zylindrisch geformt ist.

3. Elektromotor nach Anspruch 1 oder 2,
**dadurch gekennzeichnet, dass**
die Dämpfungsschicht (9) ein Material mit einer intrinsischen Dämpfungscharakteristik umfasst, das im Vergleich zu dem Material des Polkörpers (8) und im Vergleich zu dem Material des Gehäuses (6) des Stators (3), das als Joch (5) wirkt, höher ist, insbesondere eine größeren logarithmische Dekrementierung aufweist.

4. Elektromotor nach einem der Ansprüche 1 bis 3,
**dadurch gekennzeichnet, dass**
die Dämpfungsschicht (9) mit dem als Joch (5) wirkenden Gehäuse (6) und/oder mit dem Polkörper (8) klebend verbunden ist.

5. Elektrische Maschine (14),
**dadurch gekennzeichnet, dass**
die elektrische Maschine (14) mindestens einen solchen Elektromotor (1) umfasst, der nach einem der oben beschriebenen Ansprüche konfiguriert ist.

## Revendications

1. Moteur électrique (1), en particulier pour un véhicule automobile (2),
- avec un logement (6) agissant comme une culasse (5), qui englobe un stator externe (3) dans une direction circonférentielle (7),
- avec un rotor interne (4), qui est monté en rotation sur le logement (6) autour d'un axe de rotation par rapport au stator (3),
- dans lequel au moins un corps de pôle (8) du stator (3) est supporté de façon radiale sur le logement (6) à l'aide d'une couche d'amortissement (9) amortissant les vibrations et le bruit, et
- dans lequel la couche d'amortissement (9) est directement en contact avec le logement (6) et avec le corps de pôle (8),
**caractérisé en ce que**,
- le corps de pôle (8) du stator (3) est formé comme un aimant permanent d'une seule pièce (11) fermé dans la direction circonférentielle (7), et
- la couche d'amortissement (9) est formée à partir de multiples couches qui sont formées à partir de matières viscoélastiques différentes et ces couches sont en relation les unes avec les autres à la façon d'un sandwich.

2. Moteur électrique selon la revendication 1,
**caractérisé en ce que**,
le corps de pôle (8) du stator (3) est moulé de façon cylindrique au moins sur son extérieur radial (10).

3. Moteur électrique selon la revendication 1 ou 2,
**caractérisé en ce que**,
la couche d'amortissement (9) comprend une matière avec une caractéristique d'amortissement intrinsèque qui est plus élevée comparée à la matière du corps de pôle (8) et comparée à la matière du logement (6) du stator (3) agissant comme une culasse (5), en particulier avec une décroissance logarithmique plus élevée.

4. Moteur électrique selon l'une quelconque des revendications 1 à 3,
**caractérisé en ce que**,
la couche d'amortissement (9) est reliée de manière adhésive au logement (6) agissant comme une culasse (5) et/ou au corps de pôle (8).

5. Machine électrique (14),
**caractérisée en ce que**,
la machine électrique (14) comprend au moins un tel moteur électrique (1), qui est configuré selon l'une quelconque des revendications précédentes.
